# EUROPEAN PATENT APPLICATION

(11) **EP 4 624 614 A1**
(43) Date of publication of application: **01.10.2025**
(21) Application number: 23894643.8
(22) Date of filing: 22.11.2023
(51) Int. Cl.: C22C 38/00, B23K 26/364, C21D 8/12, C22C 38/60, H01F 1/147

(54) **GRAIN-ORIENTED ELECTRICAL STEEL SHEET**

(30) Priority: 22.11.2022 JP 2022186163
(71) Applicant: NIPPON STEEL CORPORATION, Chiyoda-ku Tokyo 100-8071 (JP)
(72) Inventor: WADA, Naoki, Tokyo 100-8071 (JP); IWAKI, Masataka, Tokyo 100-8071 (JP); TAKAHASHI, Masaru, Tokyo 100-8071 (JP); HAMAMURA, Hideyuki, Tokyo 100-8071 (JP)
(74) Representative: Vossius & Partner Patentanwälte Rechtsanwälte mbB
(86) International application number: PCT/JP2023/042042
(87) International publication number: WO 2024/111639

(57) **Abstract**

This grain-oriented electrical steel sheet is a grain-oriented electrical steel sheet including a base steel sheet having a surface on which a plurality of grooves are formed that extend in a direction of 60 to 120° with respect to a rolling direction at an interval in the rolling direction of 2 to 10 mm, and the plurality of grooves each has a bottom portion in which Ra is 5.0 µm or less and an absolute value of Rsk is 2.0 or less along an extending direction of the plurality of grooves.

## Description

### TECHNICAL FIELD

The present invention relates to a grain-oriented electrical steel sheet.

Priority is claimed on Japanese Patent Application No. 2022-186163, filed November 22, 2022, the content of which is incorporated herein by reference.

### BACKGROUND ART

Grain-oriented electrical steel sheets are a soft magnetic material, and are mainly used as a core material of a transformer. Therefore, grain-oriented electrical steel sheets are required to have magnetic properties such as high magnetization properties and low iron loss.

Iron loss is power loss due to thermal energy consumption that occurs when a core is excited by an AC magnetic field, and the iron loss is required to be as low as possible from the viewpoint of energy saving. The level of iron loss is affected by the magnetic susceptibility, the sheet thickness, the coating tension, the impurity amount, the electric resistivity, the grain size, the magnetic domain size, and the like. Even at present when various techniques have been developed regarding grain-oriented electrical steel sheets, research and development for reducing iron loss is being continued in order to increase energy efficiency.

As one of the methods for reducing iron loss, a technique of forming a groove on a sheet surface has been proposed. For example, Patent Documents 1 and 2 disclose a technique of forming a groove on a base metal surface by press working, electrolytic etching, or the like. In such a technique, a groove parallel to the width direction of a steel sheet is formed to refine the 180° magnetic domain width, and accordingly, the eddy-current loss that is part of the iron loss is reduced.

However, a groove formed on a steel sheet by groove formation as in Patent Documents 1 and 2 has larger unevenness than the sheet surface, and thus hinders movement of the domain wall. Iron loss includes eddy-current loss and hysteresis loss. In the cases of Patent Documents 1 and 2, the eddy-current loss is reduced by groove formation, but the hysteresis loss, which is part of the iron loss, is increased, and thus there is room for further improvement of the iron loss. It is considered that the groove formed on the steel sheet by groove formation preferably has a refined magnetic domain width and small unevenness in order to prevent hindrance of the domain wall movement.

Regarding unevenness of a groove, for example, Patent Document 3 discloses a grain-oriented electrical steel sheet including a steel sheet having a sheet surface on which a groove is formed that extends in a direction intersecting a rolling direction and has a groove depth direction in the sheet thickness direction, wherein when the groove is viewed in a longitudinal groove cross-section including the groove extending direction and the sheet thickness direction, a roughness curve forming an outline of a groove bottom region of the groove has an arithmetical mean height Ra of 1 µm or more and 3 µm or less.

Patent Document 4 discloses a wound core including a grain-oriented electrical steel sheet having a sheet surface on which a groove is formed, for stress-relief annealing resistant magnetic domain refinement, that extends in a direction intersecting a rolling direction and has a groove depth direction in the sheet thickness direction, wherein when the groove is viewed in the longitudinal groove cross-section including the groove extending direction and the sheet thickness direction, a roughness curve forming an outline of a groove bottom region of the groove has an arithmetical mean height Ra of 1.1 µm or more and 2.7 µm or less.

### Citation List

### Patent Document

Patent Document 1: Japanese Examined Patent Application, Second Publication No. S62-53579
Patent Document 2: Japanese Examined Patent Application, Second Publication No. S62-54873
Patent Document 3: PCT International Publication No. WO 2016-171124
Patent Document 4: Japanese Unexamined Patent Application, First Publication No. 2019-24039

### SUMMARY OF INVENTION

### Technical Problem

In Patent Documents 3 and 4 described above, Ra of the groove bottom region is controlled within a predetermined range. However, as a result of studies by the present inventors, it has been found that hysteresis loss cannot be necessarily reduced even if Ra is reduced.

Therefore, an object of the present invention is to provide a grain-oriented electrical steel sheet having a groove in which a 180° magnetic domain width is refined and a reduction in hysteresis loss is suppressed, thus having low iron loss.

### Solution to Problem

In order to clarify the shape of a groove that does not hinder the domain wall movement in a grain-oriented electrical steel sheet on which a groove is formed, the present inventors have studied the reason hysteresis loss is not reduced even if Ra is small in a certain range or less. As a result, it has been found that even if Ra is small, hysteresis loss is not reduced in a case where unevenness is steep.

The present invention has been made on the basis of the above-described findings. The gist of the present invention is as follows.
[1] A grain-oriented electrical steel sheet according to one aspect of the present invention is a grain-oriented electrical steel sheet including a base steel sheet having a surface on which a plurality of grooves are formed that extend in a direction of 60 to 120° with respect to a rolling direction at an interval in the rolling direction of 2 to 10 mm, and in a bottom portion of the grooves, Ra is 5.0 µm or less and an absolute value of Rsk is 2.0 or less along an extending direction of the grooves.
[2] In the grain-oriented electrical steel sheet according to [1], in a side surface of the grooves, Ra is 5.0 µm or less along the extending direction of the grooves. Advantageous Effects of Invention

According to the above-described aspect of the present invention, a grain-oriented electrical steel sheet having low iron loss can be provided.

### BRIEF DESCRIPTION OF DRAWINGS

[FIG. 1] A view illustrating an example of a state of forming grooves of a grain-oriented electrical steel sheet according to the present embodiment.
[FIG. 2] A view of a laser irradiation step for groove formation as viewed from an RD direction.
[FIG. 3] A view of a laser irradiation step for groove formation as viewed from an ND direction.

### DESCRIPTION OF EMBODIMENTS

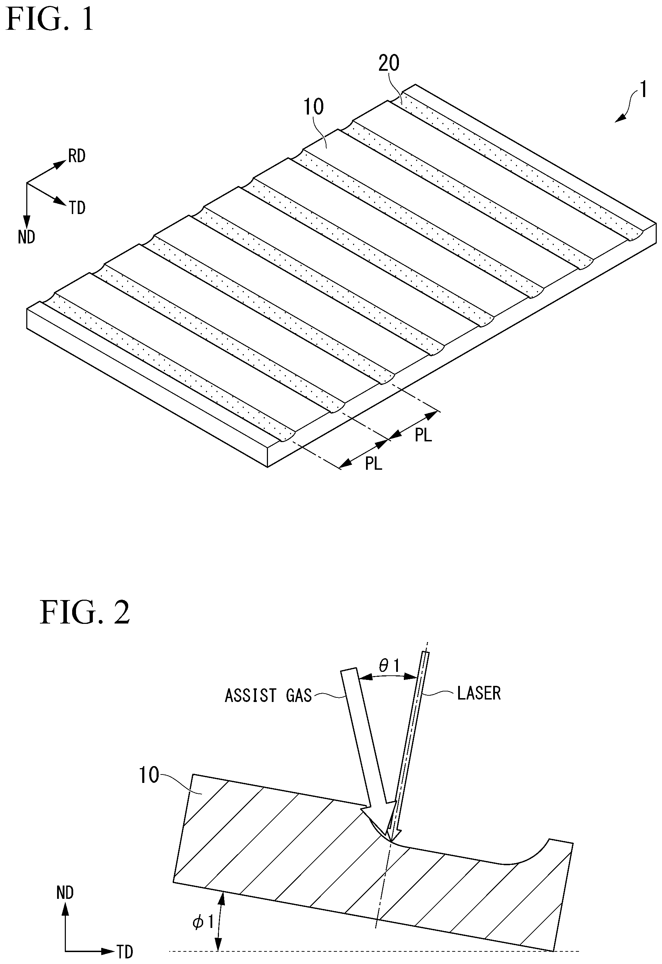

A grain-oriented electrical steel sheet according to one embodiment of the present invention (grain-oriented electrical steel sheet according to the present embodiment) will be described. As illustrated in FIG. 1, a grain-oriented electrical steel sheet 1 according to the present embodiment includes a base steel sheet (grain-oriented electrical steel sheet) 10 having a surface on which grooves 20 are formed. A plurality of grooves 20 are formed at an interval PL in a rolling direction RD of 2 to 10 mm. Each groove 20 extends in a direction of 60 to 120° with respect to the rolling direction RD (a direction of ±30° with respect to TD).

In the grain-oriented electrical steel sheet 1 according to the present embodiment, in a bottom portion of the groove 20, Ra is 5.0 µm or less and an absolute value of Rsk is 2.0 or less along the extending direction of the groove.

Each will be described below.

### <Base Steel Sheet>

The grain-oriented electrical steel sheet to be the base steel sheet is not limited, and may be a known grain-oriented electrical steel sheet. For example, a grain-oriented electrical steel sheet manufactured by a known method (for example, a grain-oriented electrical steel sheet satisfying JIS C 2553: 2019 or a proprietary standard product of each steel company) may be used. The grain-oriented electrical steel sheet can contain, for example, Si: 2.50 to 4.50%, Mn: 0.01 to 0.15%, C: 0.085% or less, acid-soluble Al: 0.065% or less, and N: 0.012% or less, and as necessary, Cr: 0.3% or less, Cu: 0.4% or less, P: 0.5% or less, Sn: 0.3% or less, Sb: 0.3% or less, Ni: 1% or less, S: 0.015% or less, Se: 0.015% or less, and Bi: 0.02% or less, as the chemical composition by mass%. The grain-oriented electrical steel sheet may contain the above-described chemical composition and the balance of Fe and an impurity.

The thickness of the target base steel sheet (grain-oriented electrical steel sheet) is not limited, and is, for example, 0.15 to 0.23 mm from the viewpoint that the eddy-current loss becomes lower as the sheet thickness becomes thinner.

### <Groove>

### [Interval, Extending Direction, Shape]

As described above, in the grain-oriented electrical steel sheet 1 according to the present embodiment, the plurality of grooves 20 extending in a direction of 60 to 120° with respect to the rolling direction are formed substantially in parallel on the surface of the base steel sheet 10 at an interval PL in the rolling direction RD of 2 to 10 mm. In the grain-oriented electrical steel sheet 1 according to the present embodiment, a magnetic domain refinement effect can be obtained by the grooves 20 formed on the surface of the base steel sheet (base metal) under the above conditions.

If the interval PL between the grooves 20 (interval between adjacent grooves) is less than 2 mm, the grooves remarkably hinder magnetic flux formation. Meanwhile, if the interval PL is more than 10 mm, the effect of improving the magnetic properties by the grooves is greatly reduced. The interval PL is a distance from the center of a groove to the center of an adjacent groove.

If the extending direction of each groove 20 deviates from 60 to 120° with respect to the rolling direction RD (becomes less than ±60° with respect to the rolling direction, that is, becomes close to parallel to the rolling direction RD), the effect of magnetic domain refinement cannot be sufficiently obtained. The extending direction is preferably close to 90° with respect to the rolling direction RD (parallel to the width direction TD).

The length of the groove 20 in the extending direction is not limited, and the groove 20 is preferably formed continuously over the entire width direction from an end portion in the width direction of the steel sheet to the other end portion.

The shape (depth, width, and the like) of the groove 20 is not limited, and for example, the depth is 10 to 40 µm and the width is 10 to 200 µm from the viewpoint of refinement of the 180° magnetic domain width.

### [Ra and Rsk in Bottom Portion]

The 180° magnetic domain width is refined by forming the groove 20 in a direction intersecting the rolling direction of the base steel sheet 10, and accordingly, the eddy-current loss that is part of the iron loss is reduced.

Examples of methods of forming a groove on a base steel sheet include laser irradiation and machining methods. However, in any of such methods, a groove formed on a base steel sheet has larger unevenness than the steel sheet surface. Therefore, the formed groove hinders the movement of the domain wall and the hysteresis loss increases.

Therefore, in the grain-oriented electrical steel sheet 1 according to the present embodiment, in order to reduce the unevenness of a groove formed on the base steel sheet 10, the arithmetical mean roughness Ra of the bottom portion of the groove is reduced. Specifically, Ra is set to 5.0 µm or less. If Ra is more than 5.0 µm, the movement of the domain wall is significantly hindered.

Meanwhile, as a result of examination by the present inventors, it has been found that even if Ra is 5.0 µm or less, hysteresis loss is not reduced as long as the unevenness is steep. Therefore, in the grain-oriented electrical steel sheet 1 according to the present embodiment, Ra is set to 5.0 µm or less and the absolute value of the skewness Rsk is set to 2.0 or less in the bottom portion of the groove 20. If the absolute value of Rsk is more than 2.0, the effect of reducing hysteresis loss cannot be obtained. Ra and Rsk are preferably small.

In the present embodiment, Ra and Rsk have the same definitions as the arithmetical mean roughness Ra and the skewness Rsk of the roughness curve specified in JIS B 0601: 2013, respectively.

The reason for control of Ra and Rsk in the bottom portion of the groove is that the unevenness of the bottom portion of the groove most affects the iron loss.

Ra and Rsk in the bottom portion of the groove can be measured using a laser microscope (3D laser microscope using a confocal optical system by a pinhole).

Specifically, the surface roughness of the groove in a range of 1 mm or more in the extending direction is measured at five or more sites in the bottom portion (at the deepest position) of the groove using a laser microscope. The average value of the measurement values at five or more sites is used to determine Ra and Rsk.

Ra and Rsk are determined on the basis of the obtained profile of roughness in accordance with the definitions in JIS B 0601: 2013.

The depth D and the width W of the groove can be measured using a laser microscope (3D laser microscope using a confocal optical system by a pinhole).

Specifically, the maximum depth d in a groove cross section orthogonal to the extending direction of the groove is measured using a laser microscope at five or more sites away from each other by 1 mm or more. The average value of the measurement values d at five or more sites is regarded as the depth D of the groove. Similarly, the width w (groove opening part) at a depth 0.05 times the groove depth d in a groove cross section orthogonal to the extending direction of the groove is measured using a laser microscope at five or more sites away from each other by 1 mm or more. The average value of the measurement values w at five or more sites is regarded as the width W of the groove.

Ra of the side surface of the groove is not necessarily limited, and in the case of further reducing the iron loss, Ra of the side surface of the groove is preferably set to 5.0 µm or less while Ra and Rsk in the bottom portion of the groove are set to the above ranges.

As a general method of reducing Ra of the side surface of the groove, a shot blasting treatment is considered, but a shot blasting treatment may increase the absolute value of Rsk in the bottom portion of the groove to more than 2.0. Therefore, Ra of the side surface of the groove may be set to be in a range of more than 5.0 µm in order to secure predetermined Rsk.

Ra of the side surface of the groove is measured with the following method.

The surface roughness of the groove in a range of 1 mm or more in the extending direction is measured at five or more sites at a point where the depth of the groove is 1/2 of the maximum depth d using a laser microscope. The average value of the measurement values at five or more sites is regarded as Ra of the side surface of the groove.

### <Glass film>

In the grain-oriented electrical steel sheet 1 according to the present embodiment, a glass film may be formed on the base steel sheet 10.

The glass film (also referred to as primary coating) is an inorganic coating containing magnesium silicate as a main component. The glass film is formed in final annealing when an annealing separator including magnesia (MgO) applied on the surface of the base steel sheet reacts with a component on the surface of the base steel sheet. The glass film has a composition derived from the annealing separator and the component of the base steel sheet, and has a microstructure including a Mg₂SiO₄ phase as a main phase (50 area% or more) and an MgAl₂O₄ phase. In addition to these phases, a precipitate may be included in an amount of about 1% or less.

### <Insulating Coating>

In the grain-oriented electrical steel sheet 1 according to the present embodiment, an insulating coating may be formed directly on the base steel sheet 10, or on the glass film formed on the base steel sheet 10.

The insulating coating imparts electrical insulation properties to the grain-oriented electrical steel sheet to reduce the eddy-current loss, and thus improves the iron loss properties of the grain-oriented electrical steel sheet. **In** addition to the electrical insulation properties as described above, various properties such as corrosion resistance, heat resistance, and slippage can be obtained.

If an insulating coating is a tension-imparting insulating coating, the insulating coating has a function of applying tension to the grain-oriented electrical steel sheet. If a tension is applied to the grain-oriented electrical steel sheet to facilitate the domain wall movement in the grain-oriented electrical steel sheet, the iron loss properties of the grain-oriented electrical steel sheet can be improved.

The tension-imparting insulating coating may be, for example, a known coating that is formed by applying a coating liquid containing a metal phosphate and silica as main components onto the surface of the glass film and baking the coating liquid.

### <Manufacturing Method>

Next, a method of manufacturing the grain-oriented electrical steel sheet according to the present embodiment will be described.

An effect of the grain-oriented electrical steel sheet according to the present embodiment can be obtained regardless of the manufacturing method as long as the grain-oriented electrical steel sheet has the above-described characteristics, but a manufacturing method including the following step is preferable because such a manufacturing method enables stable manufacture.
(I) A groove forming step of irradiating a surface of a steel sheet to be a base steel sheet with a laser beam to form a groove on the surface of the steel sheet.

Preferred conditions will be further described.

In the groove forming step, a surface of a steel sheet to be a base steel sheet (grain-oriented electrical steel sheet) is irradiated with a laser beam to form a groove on the surface.

A grain-oriented electrical steel sheet is usually manufactured through a slab heating step, a hot rolling step, a hot-band annealing step performed as necessary, a cold rolling step, a decarburization annealing step, and a final annealing step. In the case of forming an insulating coating, a grain-oriented electrical steel sheet is manufactured through an additive step such as an insulating coating forming step. In addition, a nitriding treatment may be performed at one or more timings of after the decarburization annealing step and before the final annealing step in the decarburization annealing step, and the heating process in the final annealing step.

In the case of obtaining the grain-oriented electrical steel sheet according to the present embodiment, the surface of the steel sheet is irradiated with a laser beam at any timing after the cold rolling step to form a groove.

A glass film is formed in the final annealing step. An insulating coating is formed in the insulating coating forming step. Therefore, in the case of setting a state in which a glass film and an insulating coating are formed on the surface of a groove, the irradiation with a laser beam (groove forming step) is preferably performed before the final annealing step. In the case of setting a state in which an insulating coating is formed on the surface of a groove, the irradiation with a laser beam is preferably performed before the insulating coating forming step.

However, even in the case of performing the irradiation with a laser beam after the insulating coating forming step, if an insulating coating is formed again in the groove after the irradiation with a laser beam, a state can be set in which an insulating coating is formed also on the surface of the groove.

The grain-oriented electrical steel sheet to be a base steel sheet may be a known grain-oriented electrical steel sheet, and therefore known manufacturing conditions can be applied except for laser beam irradiation conditions.

For irradiation with a laser beam, a laser beam emitted from a laser serving as a light source is scanned by a scanning device in a direction of 60 to 120° with respect to the rolling direction RD of the grain-oriented electrical steel sheet. The scanning is repeated while the grain-oriented electrical steel sheet is conveyed (passed) in the rolling direction, and thus a plurality of grooves substantially parallel to each other are formed at a predetermined interval in the rolling direction RD.

For formation of a groove, a laser irradiates a steel sheet under conditions of melting or evaporating the steel sheet. For example, laser irradiation conditions are preferably set to a laser output of 200 to 3000 W, a condensed spot diameter of the laser beam (that is, a diameter including 86% of the laser output, hereinafter abbreviated as 86% diameter) in the rolling direction of 10 to 1000 µm, a condensed spot diameter of the laser beam (86% diameter) in the sheet width direction of 10 to 1000 µm, and a laser scanning speed of 5 to 50 m/s.

As the laser serving as a light source, for example, a CO₂ laser can be used. A high-power laser generally used for industry, such as a YAG laser, a semiconductor laser, or a fiber laser, may be used.

The reason Ra and Rsk become large is considered to be because a portion melted by irradiation with a laser beam and re-solidified remains. Therefore, in the method of manufacturing the grain-oriented electrical steel sheet according to the present embodiment, in order to reduce Ra and Rsk in the bottom portion of the groove, the surface of the steel sheet is irradiated with a laser beam in a state where the steel sheet is inclined by 5° or more with respect to the horizontal in the width direction. Furthermore, an assist gas is blown to the portion irradiated with a laser beam.

If an assist gas is blown while the steel sheet is inclined by 5° or more with respect to the horizontal direction in the width direction (inclined so that φ1 becomes 5° or more in FIG. 2), a melted material generated by the laser irradiation is easily removed from the irradiation portion, and a melted and re-solidified material is less likely to remain in the bottom portion of the groove.

If the inclination is less than 5°, the melted material is not sufficiently removed even when an assist gas is blown.

In a case where Ra of the side surface of the groove is also reduced, the inclination (φ1) is preferably set to more than 20°.

Meanwhile, if the surface is irradiated with a laser beam in a state where the steel sheet is inclined by 3° or more with respect to the horizontal in the rolling direction, a melted material inside the groove cannot be sufficiently removed, and Ra and Rsk in the bottom portion of the groove become large. Therefore, the inclination of the steel sheet in the rolling direction (φ2: not illustrated) is set to less than 3°.

The kind of the assist gas is not limited, and examples of the assist gas include air and inert gases. From the viewpoint of suppressing formation of an oxide at the position of blowing, the assist gas is preferably an inert gas.

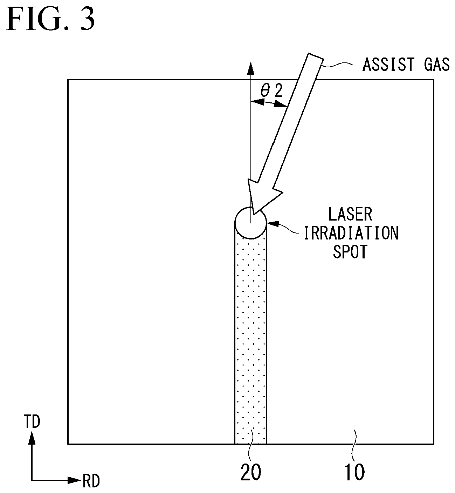

The angle formed by the direction (blowing direction) in which the assist gas is blown (θ1 illustrated in FIG. 2) and the normal direction of the steel sheet is preferably 20 to 85°. The angle formed by the direction in which the assist gas is blown and the extending direction of the groove (02 illustrated in FIG. 3) is preferably 0 to 30°.

The flow rate of the assist gas is preferably 10 to 1000 liters per minute, and the blowing speed is preferably 10 m/s or more.

In the case of reducing only Ra of the bottom portion and the side surface of the groove, a method such as a shot blasting treatment can be considered. However, if a shot blasting treatment is performed, a crack is generated on the sheet surface, and if the crack remains, the height distribution in the bottom portion of the groove locally changes greatly at the crack generation portion, resulting in an increase in the steepness of the bottom portion of the groove, that is, Rsk.

In the present invention, in order to control Ra and Rsk simultaneously, the inclination angle of the steel sheet and the blowing conditions of the assist gas are controlled as described above.

In irradiation of the inclined grain-oriented electrical steel sheet with a laser beam, the focal position is preferably prevented from deviating from the surface of the steel sheet. For example, it is preferable that scanning be performed while moving parallel to the surface of the inclined steel sheet (the distance between the irradiation device and the steel sheet is kept constant), or an operation be performed while the focal distance is changed so that the focal position is on the sheet surface.

By performing the above method, the grain-oriented electrical steel sheet according to the present embodiment is obtained.

### Examples

A slab having a Si content of 3.25 mass% was subjected to hot rolling, hot-band annealing, and cold rolling to obtain a cold-rolled steel sheet having a thickness of 0.23 mm or 0.20 mm, and the cold-rolled steel sheet was irradiated with a laser beam to form a groove on the surface.

Conditions at the time of groove formation were as shown in Table 1. Here, φ1 represents the inclination of the steel sheet with respect to the horizontal direction in the width direction, φ2 represents the inclination of the steel sheet with respect to the horizontal direction in the rolling direction, θ1 represents the angle formed by the normal direction of the steel sheet and the blowing direction of the assist gas, and θ2 represents the angle of the blowing direction of the assist gas with respect to the extending direction of the groove. As conditions other than those shown in the table, laser beam irradiation conditions were set to a laser output of 1500 W, a condensed spot diameter of the laser beam in the rolling direction of 40 µm, and a condensed spot diameter of the laser beam in the sheet width direction of 40 µm. The flow rate of an assist gas was set to 100 liters per minute, and the blowing speed was set to 50 m/s.

After the groove formation, the steel sheet was subjected to decarburization annealing, final annealing, and formation of an insulating coating, and thus each of grain-oriented electrical steel sheets No. 1 to 6, 12 to 17, 21 to 24, and 26 to 29 was obtained.

In these grain-oriented electrical steel sheets, a glass film was formed on the base steel sheet and an insulating coating was formed on the glass film in the groove similarly to another portion.

In addition, a slab having a Si content of 3.25% was subjected to hot rolling, hot-band annealing, cold rolling, decarburization annealing, final annealing, and formation of an insulating coating to obtain a steel sheet having a thickness of 0.23 mm (steel sheet with an insulating coating), and the steel sheet was irradiated with a laser beam to form a groove on the surface.

Conditions at the time of groove formation were as shown in Table 1, and as conditions other than those shown in the table, laser beam irradiation conditions were set to a laser output of 1500 W, a condensed spot diameter of the laser beam in the rolling direction of 40 µm, and a condensed spot diameter of the laser beam in the sheet width direction of 40 µm. The flow rate of an assist gas was set to 100 liters per minute, and the blowing speed was set to 50 m/s.

After the groove formation, an insulating coating was formed again. Thus, each of grain-oriented electrical steel sheets Nos. 7 to 11, 18 to 20, and 25 was obtained.

In these grain-oriented electrical steel sheets, a glass film was absent and an insulating coating was formed on the base steel sheet in the groove.

For the obtained grain-oriented electrical steel sheets (Nos. 1 to 29), the depth and the width of the groove, Ra and the absolute value of Rsk in the bottom portion of the groove, and Ra of the side surface of the groove were measured with the above-described methods.

Table 2 shows the results.

The magnetic property of each of the obtained grain-oriented electrical steel sheets was evaluated with the following method. Table 2 shows the results.

### [Evaluation of Magnetic Property]

A sample of each test number that included the sheet width center position of the grain-oriented electrical steel sheet had a width of 60 mm and a length of 300 mm, was collected. The length direction of the sample was parallel to the rolling direction. Using this sample, the iron loss W17/50 (W/kg) at a frequency of 50 Hz and a maximum magnetic flux density of 1.7 T was measured by a single sheet magnetic property test (SST test) in accordance with JIS C 2556: 2015.

A sample having a sheet thickness of 0.23 mm and an iron loss of 0.750 W/kg or less was judged to have an excellent magnetic property (low iron loss). A sample having a sheet thickness of 0.20 mm and an iron loss of 0.700 W/kg or less was judged to have an excellent magnetic property (low iron loss).

**[Table 1]**

| No. | Base steel sheet | | Groove forming step | | | | | | |
|---|---|---|---|---|---|---|---|---|---|
| | | | Laser beam irradiation conditions | | | | Assist gas | | |
| | Kind | Sheet thickness | Inclination φ1 in sheet width direction | Inclination φ2 in sheet rolling direction | Interval in rolling direction | Scanning direction (with respect to rolling direction) | Kind | Blowing angle *θ*1 | Blowing direction *θ*2 |
| | - | mm | degree | degree | mm | degree | - | degree | degree |
| 1 | Cold-rolled steel sheet | 0.23 | 0 | 0 | 5 | 90 | Air | 30 | 0 |
| 2 | Cold-rolled steel sheet | 0.23 | 10 | 0 | 5 | 90 | Air | 10 | 50 |
| 3 | Cold-rolled steel sheet | 0.23 | 10 | 0 | 15 | 90 | Air | 30 | 0 |
| 4 | Cold-rolled steel sheet | 0.23 | 10 | 0 | 5 | 30 | Air | 30 | 0 |
| 5 | Cold-rolled steel sheet | 0.23 | 0 | 0 | 5 | 90 | Air | 10 | 40 |
| 6 | Cold-rolled steel sheet | 0.23 | 0 | 0 | 12 | 150 | Air | 30 | 0 |
| 7 | Steel sheet with an insulating coating | 0.23 | 0 | 0 | 5 | 90 | Air | 30 | 0 |
| 8 | Steel sheet with an insulating coating | 0.23 | 10 | 0 | 5 | 90 | Air | 10 | 50 |
| 9 | Steel sheet with an insulating coating | 0.23 | 10 | 0 | 15 | 90 | Air | 30 | 0 |
| 10 | Steel sheet with an insulating coating | 0.23 | 10 | 0 | 5 | 30 | Air | 30 | 0 |
| 11 | Steel sheet with an insulating coating | 0.23 | 10 | 0 | 5 | 90 | Air | 10 | 50 |
| 12 | Cold-rolled steel sheet | 0.23 | 10 | 0 | 5 | 90 | Air | 30 | 0 |
| 13 | Cold-rolled steel sheet | 0.23 | 10 | 0 | 8 | 85 | Air | 30 | 0 |
| 14 | Cold-rolled steel sheet | 0.23 | 20 | 0 | 5 | 95 | Air | 30 | 0 |
| 15 | Cold-rolled steel sheet | 0.23 | 10 | 0 | 5 | 100 | Air | 50 | 10 |
| 16 | Cold-rolled steel sheet | 0.23 | 5 | 0 | 5 | 90 | Air | 30 | 0 |
| 17 | Cold-rolled steel sheet | 0.23 | 10 | 0 | 5 | 80 | Nitrogen | 30 | 0 |
| 18 | Steel sheet with an insulating coating | 0.23 | 10 | 0 | 5 | 90 | Air | 30 | 0 |
| 19 | Steel sheet with an insulating coating | 0.23 | 5 | 0 | 5 | 90 | Air | 30 | 0 |
| 20 | Steel sheet with an insulating coating | 0.23 | 10 | 0 | 5 | 90 | Air | 50 | 10 |
| 21 | Cold-rolled steel sheet | 0.23 | 25 | 0 | 5 | 90 | Air | 30 | 0 |
| 22 | Cold-rolled steel sheet | 0.23 | 30 | 0 | 5 | 90 | Air | 30 | 0 |
| 23 | Cold-rolled steel sheet | 0.23 | 21 | 0 | 5 | 90 | Air | 30 | 0 |
| 24 | Cold-rolled steel sheet | 0.23 | 25 | 0 | 5 | 90 | Air | 30 | 0 |
| 25 | Steel sheet with an insulating coating | 0.23 | 30 | 0 | 5 | 90 | Air | 50 | 10 |
| 26 | Cold-rolled steel sheet | 0.23 | 10 | 4 | 5 | 90 | Air | 50 | 10 |
| 27 | Cold-rolled steel sheet | 0.20 | 10 | 0 | 5 | 90 | Air | 30 | 0 |
| 28 | Cold-rolled steel sheet | 0.20 | 25 | 0 | 5 | 90 | Air | 30 | 0 |
| 29 | Cold-rolled steel sheet | 0.20 | 0 | 0 | 5 | 90 | Air | 30 | 0 |

**[Table 2]**

| No. | Grain-oriented electrical steel sheet | | | | | | Note |
|---|---|---|---|---|---|---|---|
| | Groove | | | | | Property | |
| | Depth | Width | Ra in bottom portion of groove | Absolute value of Rsk in bottom portion of groove | Ra of side surface of groove | Iron loss | |
| | *µ*m | *µ*m | *µ*m | - | *µ*m | W/kg | |
| 1 | 22 | 44 | 4.8 | 2.5 | 5.1 | 0.758 | Comparative Example |
| 2 | 18 | 40 | 2.4 | 2.2 | 6.1 | 0.752 | Comparative Example |
| 3 | 23 | 45 | 3.7 | 2.0 | 5.4 | 0.761 | Comparative Example |
| 4 | 15 | 42 | 4.2 | 1.9 | 5.2 | 0.754 | Comparative Example |
| 5 | 19 | 43 | 5.2 | 3.0 | 6.0 | 0.760 | Comparative Example |
| 6 | 25 | 50 | 5.5 | 2.6 | 5.1 | 0.765 | Comparative Example |
| 7 | 25 | 55 | 4.5 | 2.4 | 5.4 | 0.755 | Comparative Example |
| 8 | 19 | 39 | 3.0 | 2.3 | 5.8 | 0.753 | Comparative Example |
| 9 | 25 | 44 | 3.8 | 1.8 | 6.1 | 0.760 | Comparative Example |
| 10 | 17 | 40 | 4.0 | 1.8 | 6.3 | 0.755 | Comparative Example |
| 11 | 22 | 44 | 5.2 | 1.8 | 6.5 | 0.753 | Comparative Example |
| 12 | 20 | 40 | 3.0 | 1.5 | 5.4 | 0.744 | Invention Example |
| 13 | 21 | 39 | 2.5 | 1.0 | 5.1 | 0.747 | Invention Example |
| 14 | 22 | 44 | 1.8 | 0.8 | 5.3 | 0.741 | Invention Example |
| 15 | 20 | 45 | 3.2 | 1.8 | 5.7 | 0.745 | Invention Example |
| 16 | 21 | 37 | 2.2 | 0.6 | 5.9 | 0.739 | Invention Example |
| 17 | 18 | 39 | 2.6 | 1.2 | 5.1 | 0.746 | Invention Example |
| 18 | 18 | 42 | 2.9 | 1.6 | 5.2 | 0.745 | Invention Example |
| 19 | 23 | 45 | 2.7 | 1.5 | 6.0 | 0.744 | Invention Example |
| 20 | 21 | 42 | 3.5 | 1.8 | 6.8 | 0.746 | Invention Example |
| 21 | 25 | 50 | 3.4 | 1.2 | 4.1 | 0.720 | Invention Example |
| 22 | 22 | 45 | 2.0 | 0.9 | 2.4 | 0.702 | Invention Example |
| 23 | 19 | 44 | 1.1 | 0.5 | 1.3 | 0.694 | Invention Example |
| 24 | 30 | 58 | 0.2 | 0.4 | 0.8 | 0.687 | Invention Example |
| 25 | 30 | 61 | 2.2 | 1.0 | 2.6 | 0.705 | Invention Example |
| 26 | 20 | 41 | 5.1 | 2.4 | 5.2 | 0.754 | Comparative Example |
| 27 | 21 | 39 | 2.9 | 1.4 | 5.1 | 0.697 | Invention Example |
| 28 | 22 | 41 | 3.3 | 1.1 | 4.1 | 0.671 | Invention Example |
| 29 | 22 | 44 | 4.9 | 2.3 | 5.3 | 0.702 | Comparative Example |

As can be seen from Tables 1 and 2, an excellent iron loss was obtained in Invention Examples 12 to 25, 27, and 28 in which the grain-oriented electrical steel sheet included a base steel sheet having a surface on which a plurality of grooves were formed that extended in a direction of 60 to 120° with respect to the rolling direction at an interval in the rolling direction of 2 to 10 mm and the plurality of grooves each had a bottom portion in which Ra was 5.0 µm or less and the absolute value of Rsk was 2.0 or less along the extending direction of the plurality of grooves.

Meanwhile, in Nos. 1, 2, 5, 7, 8, 11, 26, and 29 in which any of the inclination of the steel sheet, the blowing angle of the assist gas, and the blowing direction was not set to a preferable condition in the groove forming step, Ra and/or Rsk in the bottom portion of the groove was out of the range of the present invention, and the iron loss was large.

The iron loss was large also in Nos. 3, 4, 9, and 10 in which the interval between grooves and the extending direction of the grooves were out of the range of the present invention.

Also in No. 6, in which the inclination of the steel sheet, the interval between grooves, and the extending direction in the groove forming step were out of the range of the present invention, Ra and/or Rsk in the bottom portion of the groove was out of the range of the present invention, and the iron loss was large.

### INDUSTRIAL APPLICABILITY

According to the present invention, a grain-oriented electrical steel sheet having low iron loss can be provided. Therefore, industrial applicability is high.

### REFERENCE SIGNS LIST

1 Grain-oriented electrical steel sheet
10 Grain-oriented electrical steel sheet (base steel sheet)
20 Groove

## Claims

1. A grain-oriented electrical steel sheet comprising a base steel sheet having a surface on which a plurality of grooves are formed, the plurality of grooves extending in a direction of 60 to 120° with respect to a rolling direction at an interval in the rolling direction of 2 to 10 mm, wherein
in a bottom portion of the grooves, Ra is 5.0 µm or less and an absolute value of Rsk is 2.0 or less along an extending direction of the grooves.

2. The grain-oriented electrical steel sheet according to claim 1, wherein
in a side surface of the grooves, Ra is 5.0 µm or less along the extending direction of the grooves.
